# EUROPEAN PATENT SPECIFICATION

(11) **EP 2 579 962 B1**
(45) Date of publication and mention of the grant of the patent: **07.09.2016**
(21) Application number: 11792035.5
(22) Date of filing: 08.06.2011
(51) Int. Cl.: B01J 20/18, B01J 20/32, B01J 20/02, B01J 20/28, G01N 31/22, B01D 53/28

(54) **Multiple-stage indicating desiccant, method for its preparation and its use**
Trockenmittel mit mehrstufiger Anzeige, Verfahren zu dessen Herstellung und seine Verwendung
Dessiccatif indicateur de stades multiples, procedee pous sa preparation et son utilisation.

(30) Priority: 09.06.2010 EP 10165381
(43) Date of publication of application: 17.04.2013
(73) Proprietor: BASF SE, 67056 Ludwigshafen am Rhein (DE)
(72) Inventor: SIEGEL, Angela, 30169 Hannover (DE); OTTO, Janine, 31623 Drakenburg (DE); ECKARDT, Tobias, 31582 Nienburg (DE); HAHN, Susanne, 31535 Neustadt (DE)
(74) Representative: BASF IP Association
(86) International application number: PCT/IB2011/052498
(87) International publication number: WO 2011/154907

(56) References cited:
- WO-A1-2004/083849
- CN-A- 1 081 393
- JP-A- 2008 045 809
- US-A- 5 052 188

## Description

### Technical Field

The present invention relates to an indicating desiccant, as well as to a method for the production of an indicating desiccant and to the use thereof in various desiccant applications, in particular in those requiring the monitoring of humidity.

### Introduction

Silica-based desiccants are employed in a variety of applications necessitating a dry environment. A particular problem in said applications concerns the desiccant's capacity to maintain the given environment below a certain level of relative humidity (RH) over a given period of time, and the question as to when the level of saturation of the desiccant with moisture requires its replacement and/or regeneration for further assuring a certain minimum level of dryness. In this respect, great efforts have been made to provide a desiccant with an indicating means, in particular with respect to the visual assessment of the level of moisture present in a given desiccant.

For this purpose, a variety of indicating means have been developed based on the use of inorganic or organic compounds in the silica-based materials, wherein said compounds change color in function of the level of saturation of the desiccant with moisture. Using this principle, a large number of indicating desiccants have been successfully developed, wherein the resulting materials cover a wide range of saturation grades with respect to the relative humidity present in the environment. In particular, this has led to a panoply of materials conforming to the specific needs of numerous applications. More specifically, depending on the maximum level of relative humidity which may be tolerated for a particular application, the indicating desiccant may be chosen such that the change in color coincides with a level of saturation of the desiccant with moisture wherein the material may still provide the necessary desiccating activity, yet would require the material to be promptly changed with fresh desiccant in order to assure the necessary level of dryness in the long run.

As to the indicating desiccants developed in the past, problems arose with respect to the stability of the indicator on the one hand, in particular with respect to organic indicating compounds, on the other hand regarding the toxicity of the indicating compounds used, an issue which applies in particular to the widespread use of e.g. cobalt compounds for this purpose.

In view of these problems, indicating desiccants have been developed containing inorganic indicating compounds having a low toxicity. WO 00/65339 A1, for example, discloses a humidity indicator compound comprising iron salts as the active indicator. Such indicating desiccants, however, have drawbacks with respect to the color change which is not clearly pronounced but rather slowly evolves with increasing saturation of the desiccant with moisture.

To this effect, it has been discovered that bromide as an anionic component enables the color change to be more pronounced and, in particular, to exhibit a sharp evolution at specific levels of relative humidity. Thus, WO 02/057772 A1 discloses an indicating desiccant comprising a silica-based material having impregnated thereon a source of copper and a source of bromide, wherein a specific ratio of bromide to copper is taught therein. Furthermore, WO 2004/083849 A1 discloses a comparable indicating desiccant comprising a source of iron and a source of bromide as the active indicator system.

A problem with respect to these and further indicating desiccants, however, exists regarding the remaining desiccant capacity after the change in color. In particular, there is no reliable means for easily assessing the period during which, after the indicator has changed its color, it must be replaced by fresh desiccant for sustaining the minimum level of dryness required. As a result of this, a desiccant must usually be replaced directly after the indicator has changed its color, although a considerable amount of desiccating power may still be present before actually reaching a level of saturation with moisture which is critical for further sustaining the desired level of dryness.

In this respect, WO 02/057772 A1 teaches indicating desiccants comprising copper and bromide as indicating agents, wherein said desiccant becomes colorless in a more or less pronounced color transition at a defined level of saturation with humidity. WO 2004/083849 A1, on the other hand, which compared to WO 02/057772 A1 teaches the use of iron instead of copper, displays a second color after a more or less pronounced color transition instead of becoming colorless. Although in certain instances said second color may to a certain extent further evolve with increasing saturation of the desiccant with moisture, it may not serve as a reliable indicator for the remaining capacity of the desiccant material. In particular, said materials only show a gradual and/or a fluctuating evolution in color with increasing levels of humidity, such that a practical means of indicating the further saturation of the desiccant with moisture may not be provided.

A comparable problem arises when indicating desiccants are used in applications, wherein the desiccant does not uniformly change its color, but rather a successive change occurs with respect to parts thereof. Such an application for example concerns tank breathers or the like, wherein the desiccant is brought into a channel of a certain length, through which a gas may freely flow from a humid to a dry environment, and/or - where applicable - vice versa, via the desiccant. In such applications, the flow rate of the gas may be adapted to the desiccating action of the desiccant, such that a color barrier is formed with respect to the color of the indicator in separate portions of the indicating desiccant. More specifically, it may occur in such instances that the portion of the desiccant through which the moist gas enters has the color of the saturated desiccant, and that the portion of the desiccant through which the dried gas exits (and eventually enters) has the color of the dry desiccant. Over time, the color barrier within the indicating desiccant accordingly wanders from the side on which the moist gas enters, to the side on which the moist gas leaves the material.

With respect to these specific applications, the color barrier is a further indicating means, since the speed at which it passes through the desiccant allows an approximation as to the time left before the barrier has completely crossed that material, and it must be replaced accordingly by fresh desiccant. Although this has the advantage of being able to roughly estimate the remaining capacity of the desiccant, the general problem remains that the residual desiccating capacity of the material after a total change in color may not be assessed. Furthermore, the speed at which the barrier crosses the material in such applications may only be determined by monitoring the progression over time.

In view of the above, it was therefore the object of the present invention to provide an indicating desiccant which reliably reflects the residual desiccating capacity of the material in question after the indicator has changed its color.

### Detailed Description

The above-mentioned objects are achieved by the indicating desiccant of the present invention and by the method for its production. In particular, it has surprisingly been found that an indicating desiccant may be provided which displays two distinct and pronounced color changes at different levels of saturation with moisture of the desiccant material. As a result of said feature, a multiple-stage indicating desiccant is provided which allows for the improved utilization of the material's desiccating properties. In particular, after a first change in color indicating a first degree of saturation of the desiccant material with moisture, the user may - depending on the type of application in which the desiccating material is employed - evaluate the actual necessity of replacing the desiccant with fresh material for assuring a required level of dryness. Thus, the utilized capacity of the desiccating material may be optimized in this manner.

Accordingly, the present invention relates to a multiple-stage indicating desiccant comprising:
a) at least one aluminosilica co-gel,
b) at least one source of iron, and
c) at least one source of bromide,
wherein the at least one source of iron and the at least one source of bromide are at least partially supported on the aluminosilica co-gel, preferably by impregnation thereon.

In particular, it has surprisingly been found that the specific use of an aluminosilica co-gel in combination with iron and bromide as active components in the indicator, leads to a multiple-stage indicating desiccant displaying distinct and pronounced color transitions at different levels of saturation of the desiccant component with moisture, and in particular with atmospheric moisture.

Within the meaning of the present invention, an "aluminosilica co-gel" generally refers to any silica gel in which a suitable amount of AlO₂⁻ ions, which are isomorphous with SiO₂, have been introduced. The introduction of aluminum may be achieved by any conceivable method, wherein methods of co-gelling and/or ion exchange are preferred, in particular a co-gelling method followed by at least one step of ion exchange with a suitable source of aluminum for further adjustment of the aluminum content, preferably wherein the aluminum content is further increased.

In general, the aluminum content of the aluminosilica co-gel used in the multiple-stage indicating desiccant may be adjusted to any conceivable value, provided that the multiple-stage indicating effect as defined in the present invention may be provided. By way of example, the aluminum content may be adjusted such, that the aluminosilica co-gel contains from 0.1 to 10 wt.-% of Al based on the weight of the aluminosilica co-gel, preferably from 0.5 to 5 wt.-% of Al, more preferably from 1 to 2 wt.-%, more preferably from 1.2 to 1.8 wt.-%, more preferably from 1.4 to 1.6 wt.-%, and even more preferably from 1.45 to 1.55 wt.-% of Al.

Co-gelling within the meaning of the present invention may involve any process wherein gels of alumina and silica are simultaneously formed and combined to a resulting aluminosilica co-gel wherein said gels are preferably combined during the course of the gelation and/or coagulation process. In the present invention it is preferred that the aluminosilica co-gel is at least partly obtained by a process as disclosed in DE 29 17 313 A1, wherein it is further preferred that the thus obtained aluminosilica material is further subjected to at least one ion-exchange step with a suitable source of aluminum and/or aluminate ions.

Instead of or in addition to such a co-gelling procedure, an aluminosilica co-gel within the meaning of the present invention may also be obtained by ion exchange of a silica-based material with a source of aluminum, in particular by ion-exchange of a silica gel and/or of an aluminosilica gel.

The at least one aluminoslica co-gel used in the present invention is a porous material, wherein aluminosilica co-gels of any conceivable porosity may be used provided that they at least in part display an appropriate desiccating activity. In general, the porosity of the material may range from 0.2 to 0.9 ml/g, as obtained by N₂-Physiosorption according to DIN 66131. Preferably, the porosity of the aluminosilica co-gel is comprised in the range of from 0.3 to 0.7 ml/g, more preferably of from 0.35 to 0.55 ml/g, and even more preferably of from 0.4 to 0.48 ml/g.

Furthermore, the BET surface area (according to DIN 66131) of the aluminosilica co-gel used in the present invention may range from 200 to 800 m²/g, wherein preferably, the surface area is comprised in the range of from 300 to 775 m²/g, more preferably of from 450 to 750 m²/g, more preferably of from 550 to 725 m²/g, and even more preferably of from 600 to 700 m²/g.

In the present invention, the aluminosilica co-gel used may be provided in any macroscopic form, provided that it may serve as a multiple-stage indicating desiccant. Accordingly, by way of example, said co-gel may be used in the form of a powder, in granulated form, as pellets or as beads, or also as a mixture of two or more of the former. Preferably, the aluminosilica co-gel is used provided in the form of beads. Furthermore, the aluminosilica co-gel material used in the present invention may be used in the form of a glassy, silica-gel-like material which is preferably at least partly translucent, wherein the use of a glassy, silica-gel-like material is preferred, and more preferably the material is substantially translucent.

According to a particularly preferred embodiment of the present invention, the aluminosilica co-gel used comprises KC-Trockenperlen®, also known as Sorbead®, and even more preferably KC-Trockenperlen® N, also known as Sorbead® R.

Thus, the present invention also relates to a multiple-stage indicating desiccant, wherein the at least one aluminosilica co-gel is at least partially present in the form of beads or granules, and preferably as beads.

According to a preferred embodiment of the present invention, the aluminosilica co-gel used is highly transparent and/or colorless. This may, for example, be achieved by pre-treatment of the material by any conceivable means to this effect, preferably by treatment thereof with an oxidant. As the oxidant, any conceivable oxidizing agent may be used, provided that it may afford a transparent and/or colorless aluminosilica co-gel. Examples of typical oxidizing agents which may be used include chlorine, hypochlorite, chlorite, chlorate, perchlorate, chlorine dioxide and analogous oxidizing halogen compounds of fluorine, bromine or iodine, nitric acid, nitrous oxide, ozone, hydrogen peroxide and compounds capable of generating hydrogen peroxide, for example when brought into contact with water, including peroxide compounds such as sodium perborate and persulfuric acid, as well as mixtures of two or more of the aforementioned compounds. The oxidizing agent may be used as such or, if necessary, in solution with a suitable solvent which is preferably water, more preferably distilled water. Preferably, the oxidizing agent and/or the reduction products thereof are substantially colorless, wherein even more preferably, the oxidizing agent and/or its reduction products are in the form of a gas, wherein said gas may be dissolved in a suitable solvent. Preferably, ozone, hydrogen peroxide, and/or chlorine dioxide is employed as the oxidizing agent in the present invention, wherein more preferably ozone and/or hydrogen peroxide are used. In case hydrogen peroxide is used as the oxidizing agent, it is preferably used in conjunction with a suitable solvent, which is preferably water, and even more preferably distilled water.

According to particularly preferred embodiments of the present invention, the aluminosilica co-gel is pre-treated with ozone, wherein it is further preferred that said treatment is followed by a step of saturation of the ozonated material with water, preferably distilled water, the resulting material being then further treated thereafter with H₂O₂.

Instead of or in addition to a pre-treatment with an oxidizing agent, a highly transparent and/or colorless aluminosilica co-gel may also be provided by calcination thereof, wherein the calcination is preferably performed at temperatures ranging from 450 to 600°C for a period comprised in the range of from 0.5 to 8 h, preferably of from 1.0 to 7 h, more preferably of from 1.5 to 5 h, more preferably in the range of from 2.0 to 4 h, and even more preferably in the range of from 2.5 to 3.5 h.

According to particularly preferred embodiments of the present invention, the calcination of the aluminosilica co-gel is preformed in a fired moving bed calciner, wherein said calciner preferably has temperature zones ranging from 200 to 500°C, and wherein the aluminosilica co-gel preferably has a residence time therein of from 5 to 30 h, more preferably of from 10 to 20 hours.

With respect to the at least one source of iron comprised in the multiple-stage indicating desiccant, any conceivable source of iron may be employed, provided that the multiple-stage indicating effect as defined in the present application may be achieved. In general, any suitable compound containing iron may be employed to this effect, wherein iron is preferably present as Fe(II) and/or Fe(III), more preferably as Fe(III).

Concerning the at least one source of bromide comprised in the multiple-stage indicating desiccant, any conceivable source of bromide may be employed, provided again that the multiple-stage indicating effect according to the present invention may be achieved. In this respect, it must be noted that with respect to providing said effect, the choice of the at least one source of bromide may depend on the at least one source of iron used, and vice versa, the choice of the at least one source of iron may depend on the at least one source of bromide used.

In general, the multiple-stage indicating desiccant may contain any conceivable amount of iron, provided that the multiple-stage indicating effect is achieved. By means of example, the at least one source of iron may be present in the indicating desiccant in an amount ranging from 0.05 to 0.2 wt.-% based on Fe present therein with respect to the total weight of the indicating desiccant, preferably with respect to the total weight of the components a), b), and c) comprised in the indicating desiccant, wherein preferably the amount of the at least one source of iron ranges from 0.06 to 0.16 wt.-%, more preferably from 0.07 to 0.14 wt.-%, more preferably from 0.08 to 0.12 wt.-%, and even more preferably from 0.09 to 0.11 wt.-%.

As for iron, the inventive desiccant may contain any conceivable amount of bromide, again provided that the multiple-stage indicating effect is achieved. By means of example, the at least one source of bromide may be present in an amount ranging from 0.1 to 0.5 wt.-% based on Br present therein with respect to the total weight of the indicating desiccant, preferably with respect to the total weight of the components a), b), and c) comprised in the indicating desiccant, wherein preferably the amount of the at least one source of bromide ranges from 0.2 to 0.45 wt.-%, more preferably from 0.25 to 0.40 wt.-%, and even more preferably from 0.30 to 0.38 wt.-%.

Again, regarding the amounts of the at least one source of iron and bromide, these are respectively chosen such that the multiple-stage indicating effect may be achieved. In this respect, the amount of the at least one source of iron is chosen having regard to the amount of the at least one source of bromide present in the indicating desiccant, and, vice versa, the amount of the at least one source of bromide is chosen having regard to the amount of the at least one source of iron present therein. According to a particularly preferred embodiment of the present invention, the multiple-stage indicating desiccant comprises at least one source of iron in an amount ranging from 0.05 to 0.2 wt.-% and at least one source of bromide in an amount ranging from 0.1 to 0.5 wt.-% based on the respective amounts of Fe and Br present therein with respect to the total weight of the indicating desiccant, preferably with respect to the total weight of the components a), b), and c) comprised in the indicating desiccant, and more preferably from 0.07 to 0.14 wt.-% of Fe and from 0.2 to 0.45 wt.-% of Br, more preferably from 0.08 to 0.12 wt.-% of Fe and from 0.25 to 0.40 wt.-% of Br, and even more preferably from 0.09 to 0.11 wt.-% of Fe and from 0.30 to 0.38 wt.-% of Br.

Thus, according to a preferred embodiment of the present invention, the amounts of the at least one source of iron and the at least one source of bromide comprised in the multiple-stage indicating are furthermore chosen such that the molar ratio of Fe to Br is comprised in the range of from 0.2 - 0.8 : 1, preferably in the range of from 0.3 - 0.6 : 1, more preferably of from 0.33 - 0.55 : 1, more preferably of from 0.35 - 0.5 : 1, and even more preferably in the range of from 0.37 - 0.45 : 1.

Within the meaning of the present invention, the feature of the at least one source of iron and the at least one source of bromide being at least partially supported on the at least one aluminosilica co-gel signifies that said components which contain and/or comprise Fe and/or Br are absorbed on at least a portion of the surface of the aluminosilica co-gel, wherein preferably these components are evenly distributed over the entire surface thereof. The "surface" of the aluminosilica co-gel preferably signifies the entire surface area thereof which may be accessed either by the at least one source of iron and/or bromide, or even more preferably, which may be accessed by Fe and/or Br contained and/or comprised in the respective source thereof.

According to even more preferred embodiment of the present invention, the multiple-stage indicating desiccant comprises at least one source of iron in an amount ranging from 0.05 to 0.2 wt.-% and at least one source of bromide in an amount ranging from 0.1 to 0.5 wt.-% based on the respective amounts of Fe and Br present therein with respect to the total weight of the indicating desiccant, preferably with respect to the total weight of the components a), b), and c) comprised in the indicating desiccant, wherein the at least one aluminosilica co-gel contains from 0.1 to 10 wt.-% of Al based on the weight of the aluminosilica co-gel. Even more preferred in this respect are embodiments comprising from 0.07 to 0.14 wt.-% of Fe, from 0.2 to 0.45 wt.-% of Br, and from 0.5 to 5 wt.-% of Al, more preferably from 0.08 to 0.12 wt.-% of Fe, from 0.25 to 0.40 wt.-% of Br, and from 1 to 2 wt.-% of Al, and even more preferably from 0.09 to 0.11 wt.-% of Fe, from 0.30 to 0.38 wt.-% of Br, and from 1.4 to 1.6 wt.-% of Al. According to each of the respective aforementioned embodiments, it is further preferred that the at least one aluminosilica co-gel comprises KC-Trockenperlen®, also known as Sorbead®, and even more preferably KC-Trockenperlen® N, also known as Sorbead® R.

The multiple-stage indicating desiccant of the present invention is further characterized in that it displays more than one pronounced and distinct color transition with increasing saturation of the desiccant with moisture when starting from a state of substantially complete dryness of the desiccant. In particular, a pronounced and distinct color transition within the meaning of the present invention implies that an observer may easily distinguish a state of the multiple-stage indicating desiccant which is prior to said color transition from a state after it has been subject to said color transition, wherein said act of distinguishing said states may be performed without necessitating a printed color scale or similar aid for being able to correctly recognize said transition. It is noted that within the meaning of the present invention, the terms "evolution", "change", and "transition" referring to the indicating desiccant's color are used in the sense that reflect the visible color and/or appearance of an indicating desiccant as a function of the level of saturation of the desiccant material with moisture, which in turn depends on the level of humidity surrounding the indicating desiccant, provided that the levels of humidity and their changes may be correlated to the level of saturation of the indicating desiccant with moisture. In particular, within the meaning of the present invention it is preferred that the level of humidity surrounding the indicating desiccant signifies the relative humidity (RH) of the surrounding environment. Unless stated otherwise, the aforementioned changes are changes incurred by an indicating desiccant upon increasing levels of saturation thereof with moisture. It is further noted that within the meaning of the present invention, the level of saturation of the desiccant material with moisture is correlated to the level of humidity surrounding the indicating desiccant, provided that each incremental change in the level of humidity is followed by the equilibration of the desiccant material to that new and constant level of humidity of the surrounding environment, such that the color of the indicating desiccant is indicative of a state of equilibrium with respect to the adsorption and desorption of moisture in an environment of constant humidity, preferably expressed in terms of the surrounding environment's relative humidity (RH).

In order for a color transition to be pronounced and distinct and therefore easily recognizable, the indicating desiccant's color must show a strong evolution in a relatively narrow range of saturation levels of the desiccant material with moisture. In addition to this, said strong evolution of the indicating desiccant's color must be followed by a phase, wherein the color of the resulting material remains relatively constant over a relatively large range of levels of saturation of the desiccant material with moisture. Said additional feature is essential for the distinctness of a color transition since only then is it possible to clearly recognize the point at which the transition is complete.

Therefore, an essential feature of the indicating desiccant according to the present invention is the presence of more than one pronounced and distinct color transitions as outlined in the foregoing.

According to certain embodiments of the present invention, the color transitions of the multiple-stage indicating desiccant may be quantified with the aid of the CIE-Lab color system using respective L*a*b* values. In these instances, it is preferred that departing from a state of substantially complete dryness of the desiccant, the first color transition is characterized by a rapid decline in positive values for the a* component, wherein it is particularly preferred that the values for a* after the color transition are located in the range of from 2 to -2, and more preferably in the range of from 1.5 to - 1.5, wherein it particularly preferred that said values for a* remain in those respective ranges up to high levels of saturation of the desiccating material with moisture, such as for example up to 80% relative humidity (RH) of the surrounding environment. It is further preferred that the initial values for a* prior to the first color transition range from 5 to 40, preferably from 8 to 30, and more preferably from 10 to 20.

Within the meaning of the present invention, a numerical value indicated as "% RH" corresponds to the same value in % of the relative humidity. Accordingly a value of 50% RH is used in the sense that it is synonymous to a relative humidity of 50%. In particular, 50% RH does not indicate a humidity corresponding to 50% of a given relative humidity.

According to said embodiments it is further preferred that the second color transition is characterized by a rapid decline in positive values for the b* component, wherein it is particularly preferred that said color transition is immediately preceded by a phase in which the values for the b* remain relatively constant during increasing saturation of the desiccant material with moisture after termination of the first color transition and up to the beginning of the second color transition. According to these embodiments, it is particularly preferred that immediately before the second color transition, the values for the b* component are comprised in the range of from 10 to 30, more preferably of from 15 to 20. Furthermore, it is preferred that in said phase immediately preceding the second color transition, the values for the b* component do not vary by more than ±5, preferably not more than ±3, more preferably not more than ±2, and even more preferably not more than ±1 during an increase in saturation of the desiccant material with moisture due to an increase in humidity from the surrounding environment of up to 5% RH up to the beginning of the second color transition, preferably of up to 10% RH, more preferably of up to 15% RH, more preferably of up to 20% RH, more preferably of up to 25% RH, and even more preferably of up to 30% RH, up to the beginning of said second color transition. In these instances, the increase in saturation of the desiccant material relates to an increase in saturation taking place during a phase after termination of the first color transition and prior to, preferably up to, the beginning of the second color transition.

With respect to the second color transition in said preferred embodiments, the rapid decline in positive values for the b* component preferably consists in a decline of at least 40% from the initial value of b*, more preferably of at least 50%, more preferably of at least 60% and even more preferably of at least 70% from the initial value of b* immediately preceding the decline. Furthermore, regarding the rapid decline of positive values for the b* component for said preferred embodiments, it is preferred that said decline takes place during an increase in saturation of the desiccant material with moisture due to an increase in humidity from the surrounding environment of up to 40% RH, more preferably of up to 30% RH, more preferably of up to 20% RH, more preferably of up to 10% RH, and even more preferably of up to 5% RH.

Regarding the first color transition in said preferred embodiments, the rapid decline in positive a* values preferably occurs during an increase in saturation of the desiccant material with moisture due to an increase in humidity from the surrounding environment of up to 8% RH up to the beginning of the first color transition, more preferably of up to 6% RH, more preferably of up to 4% RH, and even more preferably of up to 3% RH, from the beginning of said first color transition.

The quantification of the color transition as outlined above is however by no means meant to be limiting with respect to the subject-matter of the present invention, but is rather only exemplary of multiple color transitions as provided by the inventive indicating desiccant. Within the meaning to the present invention, a "change in color" or "color transition" provided by the inventive desiccant is generally defined as any change of the visual appearance of a material's color which may be detected by the human eye compared to the visual appearance of a material's color prior to said change, wherein said change in color is such that compared to the evolution of the desiccant's color from an initial state of substantially complete dryness to high levels of saturation with moisture such as in an environment having relative humidity levels of the atmosphere of up to 80% RH or higher, it may visually signalize to the observer that a certain level of saturation of the desiccant with moisture has been attained or surpassed. In this respect, the invention effectively provides a multiple-stage indicating desiccant, wherein the color transitions are both pronounced and distinct to the visual perception of the eye relative to the overall evolution of the material's color, in particular wherein for example the changes in the a* and b* values in the CIE-Lab color system are distinctly separated and do not show any notable overlap. According to particularly preferred embodiments of the present invention, the color transition is not perceived by the human eye as a mere change in shade or hue but rather as the presence or absence of said shade or hue, such that the change may be judged on the basis of absolute measures, and not only on the basis of relative intensities or certain types of shades or hues, in particular where this would require having comparative values for their evaluation such as in the form of a detailed color scale or the like.

Thus, reference to a "change in color", a "color change", a "color transition", or any other expression relating to these terms used in the present invention refers to a change in color of the inventive indicating desiccant as defined in the foregoing, in particular as defined for the preferred embodiments of the present invention as mentioned therein.

In general, the color transitions displayed by the multiple-stage indicating desiccant of the present invention may occur in any conceivable range of levels of saturation of the desiccant material with moisture, provided that two or more pronounced and distinct color transitions within the meaning of the present invention are observed during the entire course of gradual saturation of the desiccant material contained therein with moisture, preferably of the aluminosilica co-gel comprised therein.

In this respect, the first change in color may occur in principle at any level of saturation of the inventive desiccant with moisture, provided that at least one further color transition occurs prior to complete saturation thereof with moisture. Thus, by way of example, the first change in color may occur at a relative humidity of the surrounding environment of less than or equal to 80% RH, 60% RH, 40% RH, or of less than or equal to 20% RH. According to particularly preferred embodiments, the first change in color of the inventive desiccant occurs at a relative humidity of the surrounding environment of less than or equal to 14% RH, preferably of less than or equal to 8% RH, more preferably of less than or equal to 5% RH, and even more preferably of less than or equal to 3% RH.

Regarding the second change in color of the inventive desiccant, said color transition may occur in principle at any level of saturation of the desiccant with moisture, provided that the color transition only occurs at a sufficient interval from the completed first color transition, such that a distinct sequence of color transitions is assured. Thus, by way of example, the second color transition according to the present invention may occur at a level of saturation of the inventive desiccant with atmospheric moisture of 10% RH or greater, of 20% RH or greater, of 30% RH or greater, of 40% RH or greater, of 60% RH or greater, or of 80% RH or greater. According to particularly preferred embodiments, the second change in color of the desiccant occurs at a relative humidity of the surrounding encvironment comprised in the range of from 15 to 50% RH, preferably of from 20 to 45% RH, more preferably of from 25 to 40% RH, and even more preferably of from 28 to 38% RH.

According to the present invention, it is preferred that the first and second transitions are separated by a range of relative humidities with respect to the level of saturation of the desiccant with moisture which corresponds to an absolute change in the level of relative humidity of at least 5%, more preferably of at least 10%, more preferably of at least 15%, more preferably of at least 20%, more preferably of at least 25%, and even more preferably of at least 30%. It is, however, generally preferred according to the present invention that the separation of the first and second color transitions corresponds to a change in relative humidity of at least 5%. Thus, the present invention also concerns embodiments wherein the color transitions are separated by a range of relative humidities of from 5% up to 40%, 50%, 60%, or from 5% up to 70%, for example. Within the meaning of the present invention, a separation between the color transitions refers to an absolute change of relative humidity in % measured as of completion of the first color transition up to a relative humidity at which the starting point of the second color transition is located. In particular, by way of example for the values given for the absolute change in relative humidity given in %, a change of 5% may e.g. stand for an increase in relative humidity from 30% RH to 35% RH.

According to further embodiments of the present invention, the inventive desiccant may display a third or further color transitions after the second transition, wherein, if applicable, the same preferably applies accordingly with respect to the third and further color transitions, as with respect to the second color transition as defined in the present application. In particular, regarding the separation of a third or further color transition from the color transition which has directly preceded them, respectively, the same preferably applies, as far as applicable to said third or further color transition, as to the second color transition with respect to the first color transition by which it is preceded.

According to preferred embodiments of the present invention, the second or further color transition results in a state of the indicating desiccant which may be considered colorless as far as visual perception thereof is concerned, wherein it is especially preferred that such a colorless state is reached at the end of the second color transition of the inventive indicating desiccant. In particular, within the meaning of the present invention, "colorless" refers to a state in which the visible appearance of the multiple-stage indicating desiccant highly resembles the appearance of the aluminosilica co-gel which is devoid of an indicating compound, in particular in which the visible appearance resembles the appearance of the aluminosilica co-gel which is devoid of the at least one source of iron and/or of the at least one source of bromide. In terms of the CIE-Lab color system, said colorless state preferably refers to a state wherein the a* values of the inventive indicating desiccant do not exceed ±5, more preferably ±3, more preferably ±2, and even more preferably do not exceed ±1.5. In particular, however, the colorless state corresponds to a state wherein when compared to the a* values obtained for the aluminosilica co-gel which is devoid of an indicating compound as defined in the foregoing, the a* values do not deviate from said reference value by more than ±5, preferably ±3, more preferably ±2, and even more preferably does not deviate from said reference value by more than ±1.5. With respect to the b* values, said colorless state preferably refers to a state wherein said values do not exceed ±10 with respect to the inventive indicating desiccant, and wherein said values more preferably do not exceed ±8, more preferably ±6, more preferably ±4, more preferably ±3, and even more preferably do not exceed ±2. As for the a* values, the colorless state preferably corresponds to a state wherein when compared to the b* values obtained for the aluminosilica co-gel which is devoid of an indicating compound as defined in the foregoing, the b* values do not deviate from said reference value by more than ±5, preferably ±3, more preferably ±2, and even more preferably does not deviate from said reference value by more than ±1.5.

Within the meaning of the present invention regarding a state of the indicating desiccant which is colorless, it is particularly preferred according to the present invention that the indicating desiccant becomes colorless at a relative humidity of at least 75% RH, preferably of at least 60% RH, more preferably of at least 50% RH, more preferably of at least 45% RH, and even more preferably of at least 40% RH.

In principle, the multiple-stage indicating desiccant according to the present invention may be obtained according to any conceivable method, provided that it displays the inventive features as defined in the foregoing with respect to the inventive embodiments and in particular with respect to the preferred embodiments of the invention.

The present invention further relates to a method for the production of a multiple-stage indicating desiccant. In general, the indicating desiccant of the present invention as defined in the foregoing may be obtained by any suitable method according to which an indicating desiccant may be provided displaying the inventive features as outlined above.

According to a particular embodiment of the present invention, the multiple-stage indicating desiccant is produced by a method comprising the steps of:
(i) providing at least one aluminosilica co-gel;
(ii) impregnating the aluminosilica co-gel with at least one source of iron;
(iii) impregnating the aluminosilica co-gel with at least one source of bromide; and
(iv) drying of the impregnated aluminosilica co-gel,
wherein in step (iv) the impregnated aluminosilica co-gel is optionally washed prior to drying thereof.

In the production method of the present invention, the aluminosilica co-gel provided in step (i) is preferably an aluminosilica co-gel as defined in the foregoing. In particular, according to a preferred embodiment of the present invention, the aluminosilica co-gel provided in step (i) contains from 0.1 to 10 wt.-% of Al based on the weight of the aluminosilica co-gel, preferably from 0.5 to 5 wt.-% of Al, more preferably from 1 to 2 wt.%, more preferably from 1.2 to 1.8 wt.-%, more preferably from 1.4 to 1.6 wt.-%, and even more preferably from 1.45 to 1.55 wt.-% of Al. According to a particularly preferred embodiment of the present invention, the production method employs an aluminosilica co-gel which comprises KC-Trockenperlen®, also known as Sorbead®, and even more preferably KC-Trockenperien® N, also known as Sorbead® R.

Regarding the one or more sources of iron which may be used in the inventive production process, any conceivable source may be employed provided that it contains at least one Fe(II) and/or Fe (III)-source, wherein the use of at least one Fe(III)-source is preferred. According to particularly preferred embodiments of the invention, the source comprises at least one Fe(III)-salt which is preferably an Fe(III) sulfate, wherein the Fe(III)-salt is more preferably (NH₄)Fe(SO₄)₂ and/or KFe(SO₄)₂, and even more preferably (NH₄)Fe(SO₄)₂.

Concerning the one or more sources of bromide which may be employed in the inventive production process, any conceivable source may be employed, wherein the at least one source of bromide preferably comprises at least one bromide salt selected from the group consisting of NaBr, KBr, CaBr, MgBr, (NH₄)Br, and mixtures of two or more thereof. According to particularly preferred embodiments, the at least one source of bromide comprises NaBr and/or (NH₄)Br, more preferably NaBr.

According the production method of the present invention, the impregnation of the aluminosilica co-gel provided in step (i) may be performed in any conceivable fashion, provided that the resulting indicating desiccant effectively supports both iron and bromide, preferably Fe(III) and bromide. In particular, said impregnation of the aluminosilica co-gel may be performed by a step (ii) of impregnating with at least one source of iron, followed by a step (iii) of impregnating with at least one source of bromide. According to alternative embodiments of the present invention, however, the sequence of said steps may be inversed, such that a first step of impregnating the aluminosilica co-gel with at least one source of bromide according to step (iii) is followed by a step of impregnating said co-gel with at least one source of iron. Within the meaning of the present invention, it is equally possible to repeat said impregnation steps (ii) and/or (iii) as often as necessary for achieving the desired loading of the aluminosilica co-gel with iron and bromide.

It is, however, preferred in the present invention that steps (ii) and (iii) are at least in part conducted simultaneously, i.e. in one or more common steps of impregnation, wherein said step of simulataneous impregnation may be repeated one or more times.

Thus, the present invention also relates to a method of production, wherein steps (ii) and (iii) are at least in part conducted simultaneously by impregnating the aluminosilica co-gel with at least one source of iron and at least one source of bromide. The present invention however also includes embodiments, wherein said at least one step of impregnation, wherein steps (ii) and (iii) are conducted simultaneously in one or more common steps, may be preceded and/or followed by one or more individual steps of impregnating the aluminosilica co-gel according to steps (ii) and/or (iii).

In general, the one or more steps of impregnating the aluminosilica co-gel according to the present invention with at least one source of iron and/or bromide may be conducted by any conceivable means, provided that an appropriately impregnated aluminosilica co-gel is obtained. Thus, regarding the actual operation of impregnating of the aluminosilica co-gel as defined in steps (ii) and (iii), respectively, any conceivable method of impregnation may be used, wherein it is preferred that the impregnation is achieved by a soaking and/or by an incipient wetness procedure.

Accordingly, it is preferred in the present invention that the impregnation of the aluminosilica co-gel is achieved with the aid of at least one suitable solvent. In principle, any solvent may be used for this purpose, provided that the at least one source of iron and/or bromide may be adequately dispersed and/or dissolved therein for the step of impregnation. In particular, the solvents preferably used in the present invention comprise water, wherein according to particularly preferred embodiments the solvent substantially consists of water, wherein even more preferably the solvent is distilled water.

According to preferred embodiments of the present invention, wherein a solvent is used which substantially consists of water, and is preferably distilled water, the pH of such an aqueous solution containing at least one source of iron and/or bromide may have any conceivable pH, provided that it is suitable for the impregnation of the at least one aluminosilica co-gel. Preferably, an aqueous solution as used in the present invention has a pH comprised in the range of from 0.5 to 5.0, wherein more preferably the pH is comprised in the range of from 0.8 to 3.0, more preferably of from 0.9 to 2.0, more preferably of from 1.0 to 1.6, more preferably of from 1.1 to 1.5, and even more preferably of from 1.2 to 1.4.

According to embodiments of the inventive production method, wherein an impregnating solution is used in steps (ii) and/or (iii), and/or wherein steps (ii) and (iii) are at least in part conducted in one or more common impregnating steps, the amounts of the at least one source of iron and/or bromide are generally chosen such that, depending of the specific impregnation technique, the necessary loading of the aluminosilica co-gel is achieved for further obtaining a multiple-stage indicating desiccant according to the present invention. Thus, according to particular embodiments, the amount of the at least one source of bromide used is chosen such that the resulting impregnating solution comprises from 0.5 to 4 wt.-% of bromide, wherein it is preferred that the resulting impregnating solution comprises from 1 to 3 wt.-%, more preferably from 1.5 to 2.5 wt.%, more preferably from 1.7 to 2.2 wt.-%, more preferably from 1.9 to 2.0 wt.-%, and even more preferably from 1.92 to 1.96 wt.-% of bromide. Furthermore, with respect to the amount of the at least one source of iron which is chosen for use in the inventive production method, said amount is chosen such that the resulting impregnating solution comprises from 0.02 to 0.2 wt.-% of iron, preferably from 0.05 to 0.15 wt.-%, more preferably from 0.07 to 0.13 wt.-%, more preferably from 0.08 to 0.11 wt.-%, more preferably from 0.085 to 0.10 wt.-%, and even more preferably from 0.090 to 0.096 wt.-% of iron. According to particularly preferred embodiments of the inventive production method wherein steps (ii) and (iii) are at least in part conducted simultaneously in at least one common impregnation step, it is preferred that the amounts of both the at least one source of iron and the at least one source of bromide are chosen in the above specified manner with respect to the respective amounts of bromide and iron expressed in wt.-% which are comprised in the resulting impregnating solution.

According to the present invention, the amount of iron and/or bromide comprised in a preferred impregnating solution, which is more preferably an aqueous solution, refers to the amount of said element present in the solution, irrespective of the state in which it is contained therein. It is, however, preferred, that the amount of iron and/or bromide comprised in the impregnating solution expressed in wt.-% respectively refers to iron and/or bromide which is dissolved in the impregnating solution, i.e. to the amount thereof in a solvated state.

In the production method of the present invention, the at least one aluminosilica co-gel may be provided in any conceivable state, provided that in that state it is suitable for impregnation with the at least one source of iron and/or bromide, preferably with at least one impregnating solution comprising iron and/or bromide, wherein said impregnating solution is preferably an aqueous impregnating solution. In this respect, it is preferred that the aluminosilica co-gel is subject to at least one treatment step prior to impregnation in steps (ii) and/or (iii), or prior to a step of simultaneous impregnation according to steps (ii) and (iii), for enabling and/or enhancing the subsequent impregnation treatment. To this effect, it is preferred according to the inventive production process that the at least one treatment step comprises a step of saturating the alumniosilica co-gel with a solvent, which, according to preferred embodiments involving the use of an impregnating solution and preferably an aqueous impregnating solution, is the same solvent as employed in the impregnating solution used thereafter for the step of impregnation with at least one source of iron and/or bromide. Thus, according to particularly preferred embodiments of the present invention which employ aqueous solutions for impregnation with iron and/or bromide, the aluminosilica co-gel is preferably pre-treated by saturation with water, preferably by soaking of the aluminosilica co-gel therein, wherein even more preferably the water used to this effect is distilled water

Thus, the inventive production method also relates to preferred embodiments, wherein prior to step (ii) and/or (iii) the aluminosilica co-gel is saturated with water, preferably by soaking therein, wherein the water used to this effect is preferably distilled water.

In general, the impregnation in steps (ii) and/or (iii), as well as a step of simultaneous impregnation as defined in the foregoing, may be performed for any conceivable duration, provided that the duration of impregnation is chosen such that depending on the at least one source of iron and/or bromide used in that respective step, the amount thereof which is respectively used, and the method of impregnation which is employed, the desired loading of the aluminosilica co-gel for that step is achieved. According to preferred embodiments of the present invention, wherein the impregnation is performed with an impregnating solution by means of soaking and/or incipient wetness, said impregnation is preferably conducted for a period ranging from 0.5 to 24 h, more preferably from 1 to 16 h, more preferably from 4 to 12 h, more preferably from 6 to 10 h, and even more preferably from 7 to 9 h.

Furthermore, regarding the drying of the impregnated product according to step (iv) of the inventive production method, said drying may be performed at any suitable temperature for any conceivable duration, wherein preferably the conditions of drying are chosen such that a substantially dry product is obtained, in the sense that the resulting material contains substantially no adsorbed water and thus practically has a maximal capacity of adsorption with respect to moisture. According to particular embodiments of the present invention, drying in step (iv) is conducted at a temperature comprised in the range of from 80 to 220°C, preferably of from 100 to 190°C, more preferably of from 120 to 170°C, more preferably of from 130 to 160°C, and even more preferably of from 140 to 150°C. Furthermore, although no limitation exists with respect to the duration of the drying step, provided that the desired level of dryness may be achieved in the resulting indicating desiccant, said drying is preferably conducted for a period of time ranging from 0.2 to 8 h, more preferably from 0.5 to 4 h, and even more preferably from 1 to 2 h.

In the inventive production process, the step of drying, with or without washing beforehand, according to step (iv) is conducted at least once after having impregnated the aluminosilica co-gel in at least one step with iron and bromide. According to embodiments of the present invention as described in the foregoing, wherein the sequence of steps (ii) and (iii) may be alternated, step (iv) may accordingly also be conducted after step (ii), which has been preceded by step (iii). Furthermore, according to preferred embodiments involving at least one step of simultaneous impregnation with both iron and bromide as defined in the foregoing, step (iv) is accordingly performed thereafter.

According to further embodiments of the inventive production method, one or more additional steps of drying, with or without optional washing beforehand, may be performed between steps (ii) and (iii) or between steps (iii) and (ii), depending on the chosen sequence of impregnation steps. Furthermore, with respect to embodiments involving one or more steps of simultaneous impregnation with iron and bromide in addition to one or more individual steps of impregnation according to steps (ii) and/or (iii) which are conducted prior to and/or after said at least one step of simultaneous impregnation, one or more additional steps of drying, with or without optional washing beforehand, may be conducted in between any two succeeding impregnation steps.

In addition to a multiple-stage indicating desiccant as defined in the foregoing, the present invention also relates to a multiple-stage indicating desiccant which may be obtained, i.e. which is obtainable according to the inventive method for the production of a multiple-stage indicating desiccant as defined in the present application.

Thus the present invention also relates to a multiple-stage indicating desiccant obtainable according to the production method of the present invention.

In addition to the multiple-stage indicating desiccant and to a method for the production of a multiple-stage indicating desiccant as defined in the foregoing, the present invention also relates to the use of a multiple stage indicating desiccant. In general, the multiple-stage indicating desiccants defined in the present application may be used in any conceivable fashion, wherein their use as desiccants and/or as moisture indicators is preferred.

Thus, the present invention also relates to the use of a multiple-stage indicating desiccant as defined in the foregoing as a desiccant and/or for monitoring moisture.

Within the meaning of the present invention, moisture refers to any type of content with water of a material or a combination of one or more materials selected from the group of solid, liquid, and gaseous materials. Preferably, within the meaning of the present invention, moisture refers to the water content of a liquid and/or gas, more preferably of a gas, wherein particularly preferably, moisture refers to atmospheric moisture which may be expressed in terms of relative humidity.

According to particular embodiments of the present invention, the multiple-stage indicating desiccant is used in gas drying columns, in transformer breathers, in tank breathers, in protection apparatus for electronics, in particular for telecommunication systems, and/or in laboratory desiccators. Furthermore and in particular, the multiple-stage indicating desiccant may be used in applications involving the packaging of materials, in particular in the packaging of health care and/or medicinal products. In said applications involving the packaging of materials, the multiple-stage indicating desiccant is preferably used in a receptacle and/or in a receptacle lid or stopper integrating a desiccant material.

### Examples

### Example 1

KC-Trockenperlen® N (BASF) is pre-treated by calcination in a direct (natural gas) fired moving bed calciner with temperature zones ranging from 200 to 500 °C, and an average residence time of 15 h.

After cooling, 400 g of the pre-treated aluminosilica co-gel are then slowly saturated with 300 ml water. The water is then decanted, and the support material is soaked in 235 ml of an impregnating solution containing 25 g/L NaBr and 8 g/L of (NH₄)Fe(SO₄)₂ * 12 H₂O. After 4 hours soaking time, the solution is removed by decantation, and the resulting aluminosilica co-gel is rinsed with 300 ml of water and subsequently dried at 145 °C for 12h. The dried product is dark-red in color.

**Elemental:**

| | |
|---|---|
| Al | 1.5 wt.-% |
| Fe | 0.1 wt.-% |
| Br | 0.3 wt.-% |

Starting from the dry material (sample A), samples of defined saturation with atmospheric moisture were prepared. More specifically, samples B, C, D, and E were prepared at defined humidities of 10% RH, 20% RH, 40% RH, and 80% RH, respectively. The indicated humidities reflect the state of the indicating desiccant when a sample thereof is maintained in air of a predetermined humidity for a period which is sufficient for the sample to achieve a state of equilibrium therein with respect to the exchange of moisture with said atmosphere. During said phase of equilibration of the sample, the relative humidity of the air surrounding the sample is maintained at the given value by appropriate humidifying means. Alternatively, an air stream of a defined relative humidity may be directed through the sample until the sample has reached a state of equilibrium. Sample A of ∼0% relative humidity corresponds to the sample directly obtained from Example 1 after the drying step, wherein the sample is let to cool in an atmosphere of ∼0% relative humidity.

### Color-Test

The color of the samples obtained in Example 1 was then measured using a PerkinElmer Lambda 900 Spectrometer (150mm integrating sphere) using CIE illuminant C and an observer angle of 2°, and which was calibrated to a standard white (Spectralon® Reflectance Standard). Results were expressed using the L*a*b* system in which L* represents the lightness (the higher the value, the lighter the shade), a* the red/green component (positive values are red, negative values are green), and b* the yellow/blue component (positive values are yellow, negative values are blue).

**Table 1.**

| **Sample** | **RH [%]** | **L*** | **a*** | **b*** | **color** |
|---|---|---|---|---|---|
| A | ∼0 | 52.1 | 14.4 | 26.0 | dark-red |
| B | 10 | 60.0 | -0.3 | 17.4 | yellow |
| C | 20 | 59.9 | 0.9 | 18.1 | yellow |
| D | 40 | 66.6 | -1.2 | 7.8 | colorless |
| E | 80 | 69.8 | -1.0 | 1.9 | colorless |

For comparison, the commercial indicating desiccants SORBSIL® CHAMELEON® (Oker-Chemie GmbH), referred to in the following as "SC", and KC-Trockenperlen® Orange CHAMELEON™ (BASF), referred to in the following as "TP-OC", were tested accordingly.

**Table 2.**

| **Sample** | **RH [%]** | **L*** | **a*** | **b*** | **color** |
|---|---|---|---|---|---|
| SC dry | ∼0 | 60.4 | 7.6 | 33.6 | amber |
| SC 10 | 10 | 60.6 | 7.8 | 32.1 | amber |
| SC 20 | 20 | 64.0 | 6.5 | 32.1 | amber |
| SC 40 | 40 | 71.5 | -1.6 | 24.6 | light amber |
| SC 80 | 80 | 74.8 | -3.3 | 18.6 | light amber |

**Table 3.**

| **Sample** | **RH [%]** | **L*** | **a*** | **b*** | **color** |
|---|---|---|---|---|---|
| TP-OC dry | ∼0 | 53.2 | 3.2 | 26.7 | orange |
| TP-OC 80 | 80 | 69.7 | -0.8 | 1.2 | colorless |

### Discussion

As displayed by the results in Table 1 for samples A to E obtained from Example 1, the indicating desiccant according to the present invention displays two pronounced and distinct color transitions at different levels of saturation of the desiccant with atmospheric moisture. In particular, as may be taken from the evolution of the a* values with increasing levels of saturation, a first color transition occurs between the dry state of sample A and the level of saturation of the desiccant in air with 10% relative humidity as reflected by sample B. The perception of said color transition by the human eye is from dark-red in the dry sample to yellow in the sample prepared at 10% relative humidity.

With respect to the color values, it must be noted that the a* component clearly dominates in the visual perception of the color change, such that both the initial intensity of the b* component and its variation during the first color transition are negligible. In comparison to the results in Tables 2 and 3 obtained using SORBSIL® CHAMELEON® and KC-Trockenperlen® Orange CHAMELEON™, respectively, it is apparent that the color transition from sample A to sample B in Table 1 is not only far more pronounced, but also leads to a value for a* following the color transition which is practically imperceptible to the human eye. Furthermore, the values for a* with respect to the visual perception of said color component remains negligible up to high saturation levels of the indicating desiccant with moisture as may be taken from the results for samples C to E in Table 1. This feature of the inventive indicating desiccant is of utmost importance for the surprising features of the invention, since it may be ensured that the perception of a further color transition by the human eye due to changes in the b* component is not overshadowed by any notable rest- or resurging intensity of the dominating a* component.

Accordingly, as may be taken from a change in the b* values displayed in Table 1 for samples C and D of Example 1, the second color transition from light amber in sample C to practically colorless in sample D is very well perceived by the human eye since the a* values remain completely negligible throughout samples B to E. Furthermore, the first color transition reflected by the pronounced change in the a* values from samples A to B is followed by a plateau region with respect to the evolution of the b* value with increasing levels of humidity as shown in samples B and C with respect to further increase in saturation for these samples of Example 1 prepared at relative humidities of 10% RH and 20% RH, respectively. This has the combined effect of both clearly demarking the first color transition, since said transition is immediately followed by a phase of a constant color with respect to a further increase in relative humidity for the first part, as well as clearly demarking the second color transition taking place between relative humidities of 20% RH and 40% RH as shown for samples C and D of Example 1, since again the color of the indicating desiccant does not further evolve until said range of saturation with atmospheric moisture is reached. Accordingly, said "plateau" region with respect to the evolution of the color in the inventive desiccant is a further feature which enables the surprising technical effects of the present invention. This applies accordingly to the further "plateau" region following the second color transition occurring between relative humidities of 20% RH and 40% RH, the resulting samples remaining colorless to the human eye throughout the further saturation process of the inventive desiccant with moisture upon increasing relative humidity of the surrounding atmosphere as exemplified by the results for samples D and E of Example 1 displayed in Table 1.

Thus, as shown by the results from color testing performed on the samples obtained from Example 1 compared to exemplary indicating desiccants of the prior art, it is the specific coordination of a* and b* values achieved by the present invention which is unique in the art and leads to the surprising technical effects outlined in the foregoing. More specifically, it is this surprising color behavior of the indicating desiccant according to the present invention which enables a series of pronounced and distinct color transitions which are characteristic of a multiple stage indicating desiccant as provided herewith.

## Claims

1. A multiple-stage indicating desiccant comprising:
a) at least one aluminosilica co-gel,
b) at least one source of iron, and
c) at least one source of bromide,
wherein the at least one source of iron and the at least one source of bromide are at least partially supported on the aluminosilica co-gel, preferably by impregnation thereon.

2. The multiple-stage indicating desiccant of claim 1, wherein the at least one aluminosilica co-gel is at least partially present in the form of beads or granules, preferably as beads.

3. The multiple-stage indicating desiccant of claim 1 or 2, wherein the at least one source of iron is present in an amount ranging from 0.05 to 0.2 wt.-% based on Fe present therein with respect to the total weight of the indicating desiccant, preferably with respect to the total weight of the components a), b), and c) comprised in the indicating desiccant, wherein preferably the amount of the at least one source of iron ranges from 0.06 to 0.16 wt.-%, more preferably from 0.07 to 0.14 wt.-%, more preferably from 0.08 to 0.12 wt.-%, and even more preferably from 0.09 to 0.11 wt.-%.

4. The multiple-stage indicating desiccant according to any of claims 1 to 3, wherein the at least one source of bromide is present in an amount ranging from 0.1 to 0.5 wt.-% based on Br present therein with respect to the total weight of the indicating desiccant, preferably with respect to the total weight of the components a), b), and c) comprised in the indicating desiccant, wherein preferably the amount of the at least one source of bromide ranges from 0.2 to 0.45 wt.-%, more preferably from 0.25 to 0.40 wt.-%, and even more preferably from 0.30 to 0.38 wt.-%.

5. The multiple-stage indicating desiccant according to any of claims 1 to 4, wherein the aluminosilica co-gel contains from 0.1 to 10 wt.-% of Al based on the weight of the aluminosilica co-gel, preferably from 0.5 to 5 wt.-% of Al, more preferably from 1 to 2 wt.-%, more preferably from 1.2 to 1.8 wt.-%, more preferably from 1.4 to 1.6 wt.-%, and even more preferably from 1.45 to 1.55 wt.-% of Al.

6. The multiple-stage indicating desiccant according to any of claims 1 to 5, wherein the Fe : Br molar ratio is comprised in the range of from 0.2 - 0.8 : 1, preferably in the range of from 0.3 - 0.6 : 1, more preferably of from 0.33 - 0.55 : 1, more preferably of from 0.35 - 0.5 : 1, and even more preferably in the range of from 0.37 -0.45 : 1.

7. A method for the production of a multiple-stage indicating desiccant comprising the steps of:
(i) providing at least one aluminosilica co-gel;
(ii) impregnating the aluminosilica co-gel with at least one source of iron;
(iii) impregnating the aluminosilica co-gel with at least one source of bromide; and
(iv) drying of the impregnated aluminosilica co-gel;
wherein in step (iv) the impregnated aluminosilica co-gel is optionally washed prior to drying thereof, and
wherein preferably steps (ii) and (iii) are at least in part conducted simultaneously by impregnating the aluminosilica co-gel with both at least one source of iron and at least one source of bromide.

8. The method of claim 7, wherein the aluminosilica co-gel provided in step (i) contains from 0.1 to 10 wt.-% of Al based on the weight of the aluminosilica co-gel, preferably from 0.5 to 5 wt.-% of Al, more preferably from 1 to 2 wt.-%, more preferably from 1.2 to 1.8 wt.-%, more preferably from 1.4 to 1.6 wt.-%, and even more preferably from 1.45 to 1.55 wt.-% of Al.

9. The method of claim 7 or 8, wherein the at least one source of iron comprises an Fe(II) and/or an Fe(III)-source, preferably an Fe(III)-source, wherein said Fe(III)-source preferably comprises an Fe(III)-salt, more preferably (NH₄)Fe(SO₄)₂ and/or KFe(SO₄)₂, and even more preferably (NH₄)Fe(SO₄)₂.

10. The method of any of claims 7 to 9, wherein the at least one source of bromide comprises a bromide salt selected from the group consisting of NaBr, KBr, CaBr₂, MgBr₂, (NH₄)Br, and mixtures of two or more thereof, wherein the at least one source of bromide preferably comprises NaBr and/or (NH₄)Br, more preferably NaBr.

11. The method of any of claims 7 to 10, wherein steps (ii) and (iii) are conducted simultaneously by impregnating the aluminosilica co-gel with an impregnating solution comprising the at least one source of iron and the at least one source of bromide, preferably by soaking and/or by an incipient wetness technique.

12. The method of claim 11, wherein the impregnating solution is an aqueous solution which preferably has a pH comprised in the range of from 0.5 to 5.0, preferably of from 0.8 to 3.0, more preferably of from 0.9 to 2.0, more preferably of from 1.0 to 1.6, more preferably of from 1.1 to 1.5, and even more preferably of from 1.2 to 1.4.

13. The method of claim 11 or 12, wherein the impregnating solution comprises from 0.5 to 4 wt.-% of bromide, preferably from 1 to 3 wt.-%, more preferably from 1.5 to 2.5 wt.-%, more preferably from 1.7 to 2.2 wt.-%, more preferably from 1.9 to 2.0 wt.-%, and even more preferably from 1.92 to 1.96 wt.-% of bromide, and
wherein the impregnating solution further comprises from 0.02 to 0.2 wt.-% of iron, preferably from 0.05 to 0.15 wt.-%, more preferably from 0.07 to 0.13 wt.-%, more preferably from 0.08 to 0.11 wt.-%, more preferably from 0.085 to 0.10 wt.-%, and even more preferably from 0.090 to 0.096 wt.-% of iron.

14. The method of any of claims 7 to 13, wherein prior to step (ii) and/or (iii) the aluminosilica co-gel is saturated with water, preferably by soaking therein, wherein the water used to this effect is preferably distilled water.

15. The method of any of claims 7 to 14, wherein the impregnation in step (ii) and/or (iii) is performed by soaking and/or by incipient wetness; preferably for a period ranging from 0.5 to 24 h, more preferably from 1 to 16 h, more preferably from 4 to 12 h, more preferably from 6 to 10 h, and even more preferably from 7 to 9 h.

16. The method of any of claims 7 to 15, wherein drying in step (iv) is conducted at a temperature comprised in the range of from 80 to 220°C, preferably of from 100 to 190°C, more preferably of from 120 to 170°C, more preferably of from 130 to 160°C, and even more preferably of from 140 to 150°C, wherein said drying is preferably conducted for a period of time ranging from 0.2 to 8 h, more preferably from 0.5 to 4 h, and even more preferably from 1 to 2 h.

17. Use of a multiple-stage indicating desiccant according to any of claims 1 to 6 and 17 as a desiccant and/or for monitoring moisture.

18. The use of claim 17, wherein the multiple-stage indicating desiccant is used in gas drying columns, in transformer breathers, in tank breathers, in protection apparatus for electronics, in particular for telecommunication systems, in laboratory desiccators, and/or in applications involving the packaging of materials, in particular in the packaging of health care and/or medicinal products, wherein the multiple-stage indicating desiccant is preferably used in a receptacle and/or in a receptacle lid or stopper integrating a desiccant material.

## Patentansprüche

1. Mehrstufiges Indikator-Trockenmittel, umfassend:
a) wenigstens ein Aluminosilica-Co-Gel,
b) wenigstens eine Eisenquelle und
c) wenigstens eine Bromidquelle,
wobei die wenigstens eine Eisenquelle und die wenigstens eine Bromidquelle wenigstens teilweise auf dem Aluminosilica-Co-Gel aufgetragen sind, vorzugsweise durch Imprägnieren darauf.

2. Mehrstufiges Indikator-Trockenmittel gemäß Anspruch 1, wobei das wenigstens eine Aluminosilica-Co-Gel wenigstens teilweise in der Form von Kügelchen oder Granulat vorliegt, vorzugsweise als Kügelchen.

3. Mehrstufiges Indikator-Trockenmittel gemäß Anspruch 1 oder 2, wobei die wenigstens eine Eisenquelle in einer Menge in dem Bereich von 0,05 bis 0,2 Gew.-% an darin vorhandenem Fe bezogen auf das Gesamtgewicht des Indikator-Trockenmittels vorhanden ist, vorzugsweise bezogen auf das Gesamtgewicht der Komponenten a), b) und c), die in dem Indikator-Trockenmittel vorhanden sind,
wobei vorzugsweise die Menge der wenigstens einen Eisenquelle in dem Bereich von 0,06 bis 0,16 Gew.-% liegt, bevorzugter von 0,07 bis 0,14 Gew.-%, bevorzugter von 0,08 bis 0,12 Gew.-% und noch bevorzugter von 0,09 bis 0,11 Gew.-%.

4. Mehrstufiges Indikator-Trockenmittel gemäß einem der Ansprüche 1 bis 3, wobei die wenigstens eine Bromidquelle in einer Menge in dem Bereich von 0,1 bis 0,5 Gew.-% an darin vorhandenem Br bezogen auf das Gesamtgewicht des Indikator-Trockenmittels vorhanden ist, vorzugsweise bezogen auf das Gesamtgewicht der Komponenten a), b) und c), die in dem Indikator-Trockenmittel vorhanden sind, wobei vorzugsweise die Menge der wenigstens einen Bromidquelle in dem Bereich von 0,2 bis 0,45 Gew.-% liegt, bevorzugter von 0,25 bis 0,40 Gew.-% und noch bevorzugter von 0,30 bis 0,38 Gew.-%.

5. Mehrstufiges Indikator-Trockenmittel gemäß einem der Ansprüche 1 bis 4, wobei das Aluminosilica-Co-Gel von 0,1 bis 10 Gew.-% Al bezogen auf das Gewicht des Aluminosilica-Co-Gels enthält, vorzugsweise von 0,5 bis 5 Gew.-% Al, bevorzugter von 1 bis 2 Gew.-%, bevorzugter von 1,2 bis 1,8 Gew.-%, bevorzugter von 1,4 bis 1,6 Gew.-% und noch bevorzugter von 1,45 bis 1,55 Gew.-% Al.

6. Mehrstufiges Indikator-Trockenmittel gemäß einem der Ansprüche 1 bis 5, wobei das Fe:Br-Molverhältnis in dem Bereich von 0,2-0,8:1 liegt, vorzugsweise in dem Bereich von 0,3-0,6:1, bevorzugter von 0,33-0,55:1, bevorzugter von 0,35-0,5:1 und noch bevorzugter in dem Bereich von 0,37-0,45:1.

7. Verfahren zum Herstellen eines mehrstufigen Indikator-Trockenmittels, umfassend die Schritte:
(i) Bereitstellen von wenigstens einem Aluminosilica-Co-Gel;
(ii) Imprägnieren des Aluminosilica-Co-Gels mit wenigstens einer Eisenquelle;
(iii) Imprägnieren des Aluminosilica-Co-Gels mit wenigstens einer Bromidquelle; und
(iv) Trocknen des imprägnierten Aluminosilica-Co-Gels;
wobei bei Schritt (iv) das imprägnierte Aluminosilica-Co-Gel gegebenenfalls vor dem Trocknen gewaschen wird und
wobei vorzugsweise die Schritte (ii) und (iii) wenigstens teilweise gleichzeitig durchgeführt werden, indem das Aluminosilica-Co-Gel mit sowohl der wenigstens einen Eisenquelle als auch der wenigstens einen Bromidquelle imprägniert wird.

8. Verfahren gemäß Anspruch 7, wobei das bei Schritt (i) bereitgestellte Aluminosilica-Co-Gel von 0,1 bis 10 Gew.-% Al bezogen auf das Gewicht des Aluminosilica-Co-Gels enthält, vorzugsweise von 0,5 bis 5 Gew.-% Al, bevorzugter von 1 bis 2 Gew.-%, bevorzugter von 1,2 bis 1,8 Gew.-%, bevorzugter von 1,4 bis 1,6 Gew.-% und noch bevorzugter von 1,45 bis 1,55 Gew.-% Al.

9. Verfahren gemäß Anspruch 7 oder 8, wobei die wenigstens eine Eisenquelle eine Fe(II)- und/oder eine Fe(III)-Quelle umfasst, vorzugsweise eine Fe(III)-Quelle, wobei die Fe(III)-Quelle vorzugsweise ein Fe(III)-Salz umfasst, bevorzugter (NH₄)Fe(SO₄)₂ und/oder KFe(SO₄)₂ und noch bevorzugter (NH₄)Fe(SO₄)₂.

10. Verfahren gemäß einem der Ansprüche 7 bis 9, wobei die wenigstens eine Bromidquelle ein Bromidsalz ausgewählt aus der Gruppe bestehend aus NaBr, KBr, CaBr₂, MgBr₂, (NH₄)Br und Gemischen von zwei oder mehr davon umfasst, wobei die wenigstens eine Bromidquelle vorzugsweise NaBr und/oder (NH₄)Br umfasst, bevorzugter NaBr.

11. Verfahren gemäß einem der Ansprüche 7 bis 10,
wobei die Schritte (ii) und (iii) gleichzeitig durchgeführt werden, indem das Aluminosilica-Co-Gel mit einer Imprägnierlösung imprägniert wird, die die wenigstens eine Eisenquelle und die wenigstens eine Bromidquelle umfasst, vorzugsweise durch Tränken und/oder durch ein Anfeuchteverfahren.

12. Verfahren gemäß Anspruch 11, wobei die Imprägnierlösung eine wässrige Lösung ist, die einen pH-Wert aufweist, der vorzugsweise in dem Bereich von 0,5 bis 5,0 liegt, vorzugsweise von 0,8 bis 3,0, bevorzugter von 0,9 bis 2,0, bevorzugter von 1,0 bis 1,6, bevorzugter von 1,1 bis 1,5 und noch bevorzugter von 1,2 bis 1,4.

13. Verfahren gemäß Anspruch 11 oder 12, wobei die Imprägnierlösung von 0,5 bis 4 Gew.-% Bromid umfasst, vorzugsweise von 1 bis 3 Gew.-%, bevorzugter von 1,5 bis 2,5 Gew.-%, bevorzugter von 1,7 bis 2,2 Gew.-%, bevorzugter von 1,9 bis 2,0 Gew.-% und noch bevorzugter von 1,92 bis 1,96 Gew.-% Bromid, und
wobei die Imprägnierlösung ferner von 0,02 bis 0,2 Gew.-% Eisen umfasst, vorzugsweise von 0,05 bis 0,15 Gew.-%, bevorzugter von 0,07 bis 0,13 Gew.-%, bevorzugter von 0,08 bis 0,11 Gew.-%, bevorzugter von 0,085 bis 0,10 Gew.-% und noch bevorzugter von 0,090 bis 0,096 Gew.-% Eisen.

14. Verfahren gemäß einem der Ansprüche 7 bis 13,
wobei vor Schritt (ii) und/oder (iii) das Aluminosilica-Co-Gel mit Wasser gesättigt wird, vorzugsweise durch Tränken darin, wobei das zum Durchführen davon verwendete Wasser vorzugsweise destilliertes Wasser ist.

15. Verfahren gemäß einem der Ansprüche 7 bis 14,
wobei das Imprägnieren bei Schritt (ii) und/oder (iii) durch Tränken und/oder Anfeuchten durchgeführt wird, vorzugsweise über einen Zeitraum in dem Bereich von 0,5 bis 24 h, bevorzugter von 1 bis 16 h, bevorzugter von 4 bis 12 h, bevorzugter von 6 bis 10 h und noch bevorzugter von 7 bis 9 h.

16. Verfahren gemäß einem der Ansprüche 7 bis 15,
wobei das Trocknen bei Schritt (iv) bei einer Temperatur in dem Bereich von 80 bis 220 °C durchgeführt wird, bevorzugter von 100 bis 190 °C, bevorzugter von 120 bis 170 °C, bevorzugter von 130 bis 160 °C und noch bevorzugter von 140 bis 150 °C, wobei das Trocknen vorzugsweise über einen Zeitraum in dem Bereich von 0,2 bis 8 h durchgeführt wird, bevorzugter von 0,5 bis 4 h und noch bevorzugter von 1 bis 2 h.

17. Verwendung eines mehrstufigen Indikator-Trockenmittels gemäß einem der Ansprüche 1 bis 6 und 17 als Trockenmittel und/oder zum Überwachen von Feuchte.

18. Verwendung gemäß Anspruch 17, wobei das mehrstufige Indikator-Trockenmittel in Gastrocknungssäulen, in Transformatorbelüftern, in Tankbelüftern, in Schutzvorrichtungen für Elektronik, insbesondere für Telekommunikationssysteme, in Laborexsikkatoren und/oder bei Anwendungen, die das Verpacken von Materialien umfassen, insbesondere bei der Verpackung von Gesundheits- und/oder Medizinprodukten, verwendet wird, wobei das mehrstufige Indikator-Trockenmittel vorzugsweise in einem Behälter und/oder in einem Behälterdeckel oder einem Stopfen, der ein Trockenmittelmaterial integriert enthält, verwendet wird.

## Revendications

1. Dessiccatif indicateur de stades multiples comprenant :
a) au moins un co-gel d'alumino-silice,
b) au moins une source de fer, et
c) au moins une source de bromure,
dans lequel ladite au moins une source de fer et ladite au moins une source de bromure sont au moins en partie supportées sur le co-gel d'alumino-silice, préférablement par imprégnation sur celui-ci.

2. Dessiccatif indicateur de stades multiples selon la revendication 1, dans lequel ledit au moins un co-gel d'alumino-silice est au moins en partie présent sous forme de perles ou de granulés, préférablement sous forme de perles.

3. Dessiccatif indicateur de stades multiples selon la revendication 1 ou 2, dans lequel ladite au moins une source de fer est présente dans une quantité de 0,05 à 0,2 % en poids sur la base du Fe présent dans celui-ci relativement au poids total du dessiccatif indicateur, préférablement relativement au poids total des constituants a), b), et c) présents dans le dessiccatif indicateur, la quantité de ladite au moins une source de fer étant préférablement de 0,06 à 0,16 % en poids, plus préférablement de 0,07 à 0,14 % en poids, plus préférablement de 0,08 à 0,12 % en poids, et encore plus préférablement de 0,09 à 0,11 % en poids.

4. Dessiccatif indicateur de stades multiples selon l'une quelconque des revendications 1 à 3, dans lequel ladite au moins une source de bromure est présente dans une quantité de 0,1 à 0,5 % en poids sur la base du Br présent dans celui-ci relativement au poids total du dessiccatif indicateur, préférablement relativement au poids total des constituants a), b), et c) présents dans le dessiccatif indicateur, la quantité de ladite au moins une source de bromure étant préférablement de 0,2 à 0,45 % en poids, plus préférablement de 0,25 à 0,40 % en poids, et encore plus préférablement de 0,30 à 0,38 % en poids.

5. Dessiccatif indicateur de stades multiples selon l'une quelconque des revendications 1 à 4, dans lequel le co-gel d'alumino-silice contient de 0,1 à 10 % en poids d'Al sur la base du poids du co-gel d'alumino-silice, préférablement de 0,5 à 5 % en poids d'Al, plus préférablement de 1 à 2 % en poids, plus préférablement de 1,2 à 1,8 % en poids, plus préférablement de 1,4 à 1,6 % en poids, et encore plus préférablement de 1,45 à 1,55 % en poids d'Al.

6. Dessiccatif indicateur de stades multiples selon l'une quelconque des revendications 1 à 5, dans lequel le rapport molaire Fe:Br est de 0,2-0,8:1, préférablement de 0,3-0,6:1, plus préférablement de 0,33-0,55:1, plus préférablement de 0,35-0,5:1, et encore plus préférablement de 0,37-0,45:1.

7. Procédé de fabrication d'un dessiccatif indicateur de stades multiples, comprenant les étapes qui consistent à :
(i) fournir au moins un co-gel d'alumino-silice ;
(ii) imprégner le co-gel d'alumino-silice d'au moins une source de fer ;
(iii) imprégner le co-gel d'alumino-silice d'au moins une source de bromure ;
et
(iv) sécher le co-gel d'alumino-silice imprégné ;
dans lequel, à l'étape (iv), le co-gel d'aluminosilice imprégné est optionnellement lavé avant d'être séché, et
dans lequel les étapes (ii) et (iii) sont préférablement conduites au moins en partie simultanément, en imprégnant le co-gel d'aluminosilice d'au moins une source de fer et d'au moins une source de bromure.

8. Procédé selon la revendication 7, dans lequel le co-gel d'alumino-silice fourni à l'étape (i) contient de 0,1 à 10 % en poids d'Al sur la base du poids du co-gel d'alumino-silice, préférablement de 0,5 à 5 % en poids d'Al, plus préférablement de 1 à 2 % en poids, plus préférablement de 1,2 à 1,8 % en poids, plus préférablement de 1,4 à 1,6 % en poids, et encore plus préférablement de 1,45 à 1,55 % en poids d'Al.

9. Procédé selon la revendication 7 ou 8, dans lequel ladite au moins une source de fer comprend une source de Fe(II) et/ou de Fe(III), préférablement une source de Fe(III), dans lequel ladite source de Fe(III) comprend préférablement un sel de Fe(III), plus préférablement (NH₄)Fe(SO₄)₂ et/ou KFe(SO₄)₂, et encore plus préférablement (NH₄)Fe(SO₄)₂.

10. Procédé selon l'une quelconque des revendications 7 à 9, dans lequel ladite au moins une source de bromure comprend un sel de bromure sélectionné dans le groupe constitué de NaBr, KBr, CaBr₂, MgBr₂, (NH₄)Br, et de mélanges de deux de ceux-ci ou plus, dans lequel ladite au moins une source de bromure comprend préférablement NaBr et/ou (NH₄)Br, plus préférablement NaBr.

11. Procédé selon l'une quelconque des revendications 7 à 10, dans lequel les étapes (ii) et (iii) sont conduites simultanément, en imprégnant le co-gel d'alumino-silice d'une solution d'imprégnation comprenant ladite au moins une source de fer et ladite au moins une source de bromure, préférablement par trempage et/ou par une technique d'imprégnation par capillarité.

12. Procédé selon la revendication 11, dans lequel la solution d'imprégnation est une solution aqueuse qui a préférablement un pH de 0,5 à 5,0, préférablement de 0,8 à 3,0, plus préférablement de 0,9 à 2,0, plus préférablement de 1,0 à 1,6, plus préférablement de 1,1 à 1,5, et encore plus préférablement de 1,2 à 1,4.

13. Procédé selon la revendication 11 ou 12, dans lequel la solution d'imprégnation comprend de 0,5 à 4 % en poids de bromure, préférablement de 1 à 3 % en poids, plus préférablement de 1,5 à 2,5 % en poids, plus préférablement de 1,7 à 2,2 % en poids, plus préférablement de 1,9 à 2,0 % en poids, et encore plus préférablement de 1,92 à 1,96 % en poids de bromure, et
dans lequel la solution d'imprégnation comprend en outre de 0,02 à 0,2 % en poids de fer, préférablement de 0,05 à 0,15 % en poids, plus préférablement de 0,07 à 0,13 % en poids, plus préférablement de 0,08 à 0,11 % en poids, plus préférablement de 0,085 à 0,10 % en poids, et encore plus préférablement de 0,090 à 0,096 % en poids de fer.

14. Procédé selon l'une quelconque des revendications 7 à 13, dans lequel, avant l'étape (ii) et/ou (iii), le co-gel d'alumino-silice est saturé avec de l'eau, préférablement par trempage dans celle-ci, l'eau utilisée à cet effet étant préférablement de l'eau distillée.

15. Procédé selon l'une quelconque des revendications 7 à 14, dans lequel l'imprégnation à l'étape (ii) et/ou (iii) est exécutée par trempage et/ou par une technique d'imprégnation par capillarité ; préférablement pendant une période de 0,5 à 24 h, plus préférablement de 1 à 16 h, plus préférablement de 4 à 12 h, plus préférablement de 6 à 10 h, et encore plus préférablement de 7 à 9 h.

16. Procédé selon l'une quelconque des revendications 7 à 15, dans lequel le séchage à l'étape (iv) est conduit à une température de 80 à 220 °C, préférablement de 100 à 190°C, plus préférablement de 120 à 170 °C, plus préférablement de 130 à 160 °C, et encore plus préférablement de 140 à 150 °C, ledit séchage étant préférablement conduit pendant une période de temps de 0,2 à 8 h, plus préférablement de 0,5 à 4 h, et encore plus préférablement de 1 à 2 h.

17. Utilisation d'un dessiccatif indicateur de stades multiples selon l'une quelconque des revendications 1 à 6 et 17 comme dessiccatif et/ou pour surveiller l'humidité.

18. Utilisation selon la revendication 17, dans laquelle le dessiccatif indicateur de stades multiples est utilisé dans des colonnes de séchage de gaz, dans des reniflards de transformateurs, dans des reniflards de réservoirs, dans des appareils de protection pour des composants électroniques, en particulier pour des systèmes de télécommunications, dans des dessiccateurs de laboratoire, et/ou dans des applications impliquant l'emballage de matériaux, en particulier dans l'emballage de produits de santé et/ou pharmaceutiques, dans lesquelles le dessiccatif indicateur de stades multiples est préférablement utilisé dans un contenant et/ou dans un couvercle ou un bouchon utilisé comme contenant intégrant un matériau dessiccatif.
